**Europäisches Patentamt**

**European Patent Office**

**Office européen des brevets**

(11) Publication number: **0 500 506 A1**

(19)

# EUROPEAN PATENT APPLICATION

(12)

(21) Application number: **92830063.1**

(22) Date of filing: **14.02.92**

(51) Int. Cl.⁵: **G01N 35/06**

Priority 210291 IT FI91000034.

(30) Priority: **21.02.91**

(43) Date of publication of application:
**26.08.92 Bulletin 92/35**

(84) Designated Contracting States:
**DE ES FR**

(71) Applicant: **SEAC S.r.l.**
**Via L.Pancaldo n. 3/35**
**I-50127 Firenze (IT)**

(72) Inventor: **Innocenti, Alberto**
**Località Torri n.1/A**
**I-50065 Rignano sull'Arno, Firenze (IT)**

(74) Representative: **Mannucci, Gianfranco,**
**Dott.-Ing. et al**
**Ufficio Tecnico Ing. A. Mannucci Via della**
**Scala 4**
**I-50123 Firenze (IT)**

(54) **Immunoassay apparatus.**

(57) An apparatus for immunoassay and suchlike comprises: a first seating (5) for holding a plurality of samples (7) of biological fluid to be analyzed; a second seating (9) for holding at least one plate (13) with wells (15) into which is dispensed the biological fluid for assay; and a mobile arm (25) on which means (43) are provided for dispensing the biological fluid to be analyzed. Said arm (25) carries means (93) for washing the wells (15) prior to the subsequent reading of the samples contained in said wells (15).

Fig. 2

EP 0 500 506 A1

The invention relates to an apparatus for immunoassay, of the kind comprising in combination: a first seating for holding a plurality of samples of biological fluid to be analyzed; a second seating for holding at least one plate with a plurality of wells into which is introduced the biological fluid for assay; and a mobile arm on which means are provided for taking up biological fluid and placing metered portions thereof in said wells.

Machines of this kind are commonly used for carrying out immunological tests, such as EIA (enzyme immunoassay) or ELISA (enzyme-linked immunosorbent assay) and the like. In these tests a quantity of biological fluid to be analyzed, for example blood plasma, is introduced into a suitably prepared well, inside which the enzyme reaction takes place, which in this case is an antigen-antibody reaction. The antibody has previously been applied to the surface of the well and reacts with the antigens contained in the serum, to form antigen-antibody complexes which remain adhering on the surface of the well for later visual assessment in an analyzing apparatus. After the biological fluid has been dispensed into the well, suitable reagents may be added. Normally, several assays are carried out at the same time using a plate with a plurality of wells prepared for the enzyme reaction. When the wells have been filled with the biological fluid and any reagent, the plate undergoes a period of reaction, which may be at controlled temperature and/or with agitation or vibration. With machines, the reaction takes place inside the apparatus itself. In other cases, the plate is taken out of the machine to undergo any heating and/or agitation.

Next, before the result of the reaction is read off in an appropriate machine, the fluid contained in the wells must be removed. This operation is particularly sensitive because the washing must be so performed as to completely remove the liquid (consisting of the biological fluid and any reagents), without however eating into the stratum deposited on the inside of the well, which contains the antigen-antibody complexes formed during the reaction.

At present, the washing operation is performed outside the apparatus, often by hand. This causes obvious problems, not only in the necessity of handling the plates containing the samples outside the apparatus, but also because the washing is done roughly, with the risk that some of the antibody-antigen complexes found on the surface of the wells may be then removed, which would affect the results of the assay.

The object of the present invention is to provide an apparatus capable of performing all the operations of dispensing the fluid samples, dispensing any reagents, allowing the reaction to take place, and washing, with no need for handling or otherwise moving the plate containing the prepared reaction wells.

These and other aims and advantages which will become clear to those skilled in the art on the reading of the following text are achieved with an apparatus in which the arm carrying the means for taking up the biological fluid also carries means for washing the well in which the enzyme reaction has taken place prior to the subsequent reading of the samples.

Further advantageous features of the apparatus according to the invention are indicated in the accompanying claims.

The invention will be made clearer by the description and the attached drawing, which latter shows a practical, non-limiting embodiment of said invention. In the drawing:

Fig. 1 is a general front elevation of the apparatus;

Fig. 2 is a plan taken through II-II in Fig. 1;

Fig. 3 is a side elevation taken through III-III in Fig. 1;

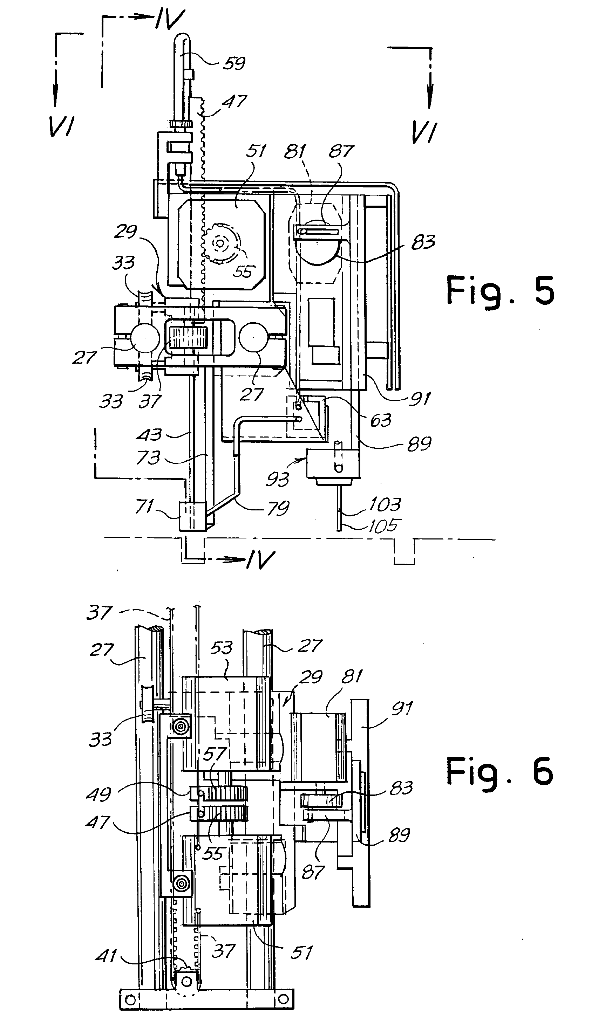

Fig. 4 is a side elevation of the arm, taken through IV-IV in Fig. 5;

Fig. 5 is a front elevation of the arm taken through V-V in Fig. 4;

Fig. 6 is a plan taken through VI-VI in Fig. 5; and

Figs 7 and 8 show two cross-sections through the washing device perpendicularly and parallel, respectively, to the longitudinal axis of the arm.

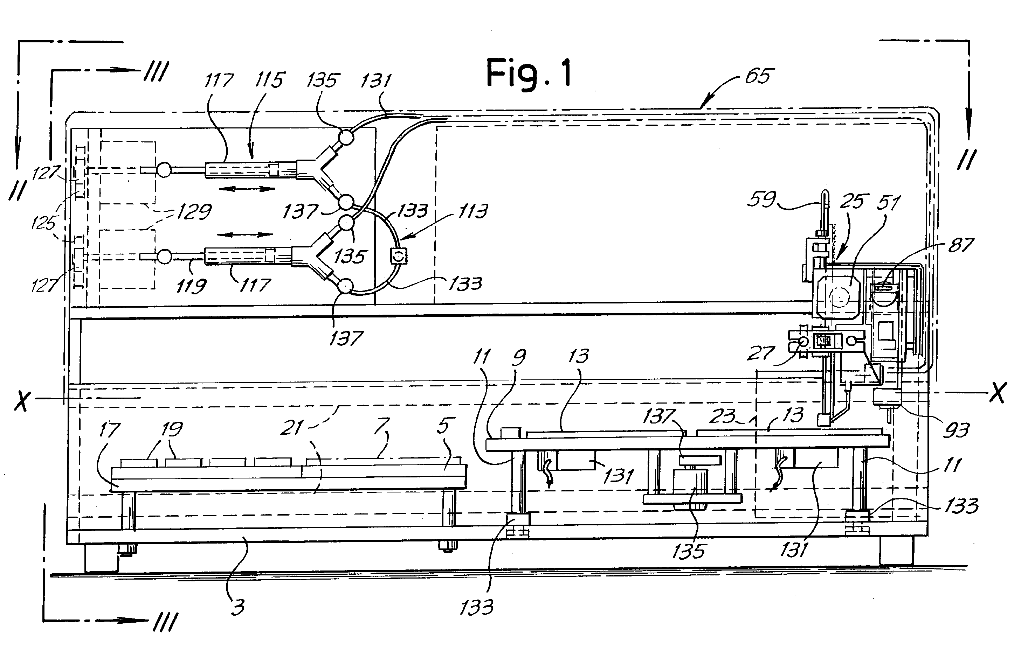

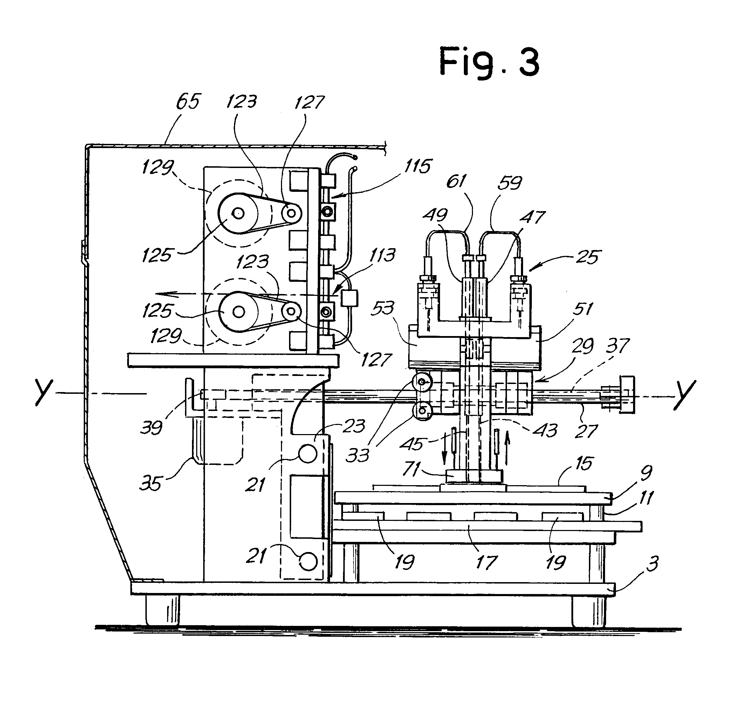

Referring initially to Figs 1 through 3, the apparatus according to the invention comprises a base 3 on which is a first seating 5 on which are set assay tubes 7 containing the biological fluid to be analyzed, for example blood plasma, urine or other materials. Next to this first seating 5 is a second seating 9, supported on legs 11, which holds four plates 13, each of which has a plurality of cylindrical wells 15 into which is dispensed the biological fluid and any reagents. The surface of each cylindrical well 15 may be covered, in a manner known per se, with a substratum for antibodies intended to react with the corresponding antigens that may be present in the biological fluid being analyzed. The reaction gives rise for example to the formation of antigen-antibody complexes which remain adhering to the surface of each well 15 and are later detected in a suitable separate apparatus. The apparatus has a third seating 17 for a series of cuvettes 19 containing the reagents for dispensing into the wells 15.

On the apparatus there is provided a pair of cylindrical guide rails indicated by 21, along which slides a runner 23 under the control of an actuator (not shown). The runner 23 carries an arm, indicated as a whole by 25, on which are arranged all the members for taking up and dispensing the biological fluid and reagents and for washing the wells 15 before readings are taken.

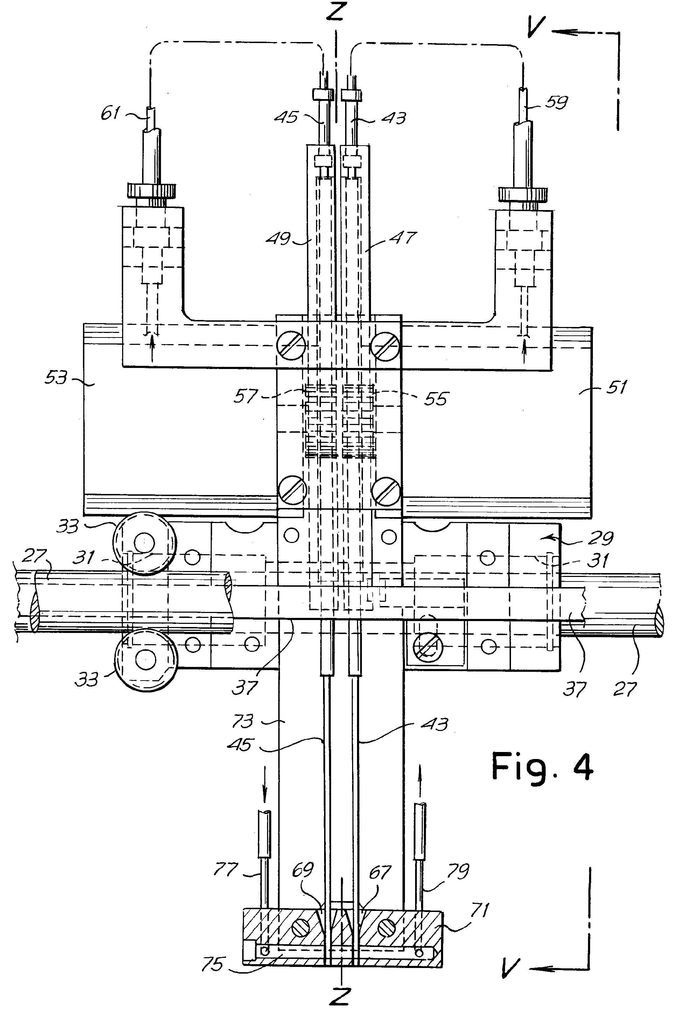

The arm 25 has a pair of cylindrical guide rails 27 at right angles to the rails 21, along which moves a carriage 29 carrying the means by which the fluids are taken up and dispensed, in addition to the means for washing the wells 15. The carriage is equipped with two guide bushings 31 (Fig. 4) which slide along one of the two rails 27, and with two rollers 33 cooperating with the other rail 27. The two pairs of guide rails 21, 21 and 27, 27 enable the carriage 29 to move along an axis X-X (parallel to the guide rails 21) and along a second axis Y-Y parallel to the rails 27. Movement along the axis Y-Y is obtained by means of an actuator 35 and of a belt 37 running around a pulley 39 operated by the actuator 35 and around a second, idle pulley 41 and attached by its ends to the carriage 29.

On the carriage 29 there is provided a first pair of hollow needles 43 and 45, for taking up and dispensing the biological fluid and reagents, respectively. Each needle 43, 45 is attached to its own rack 47, 49 which is able to move vertically along an axis Z-Z. Vertical movement of the rack 47, 49 and hence of the needles 43, 45 is provided by two stepping motors 51 and 53 respectively, which turn two corresponding pinions 55, 57 in engagement with the racks 43, 45. The travel of the needles 43, 45 is limited by appropriate position sensors (not shown) of a type known per se.

The needles 43, 45 are connected at the top to two respective flexible tubes 59 and 61 which connect said needles to aspirating and supply means described below. The tubes 59 and 61 are received in a flexible guide channel 63 that extends along the arm 25 toward the aspirating and dispensing means described below and housed in the housing 65 of the apparatus.

The needles 43, 45 are guided at their lower ends through two through holes 67, 69 (Fig. 4) in a lower guide element 71 carried by a plate 73 attached to the carriage 29. The guide element 71 has a horizontal channel 75 perpendicular to the through holes 67, 69, and closed at its ends. Into the channel 75 there emerge two flexible tubes 77 and 79 which serve for the circulation of washing water. The tubes 77, 79 are conveyed via the flexible channel 63 toward the apparatus housing 65, where a peristaltic pump or other pumping means is housed for the circulation of water in the channel 75. The circulation of the water in the channel 75 serves to keep the needles 43, 45 clean, thus avoiding contamination of the wells 15, of the serum samples and of the reagents, as will be described below.

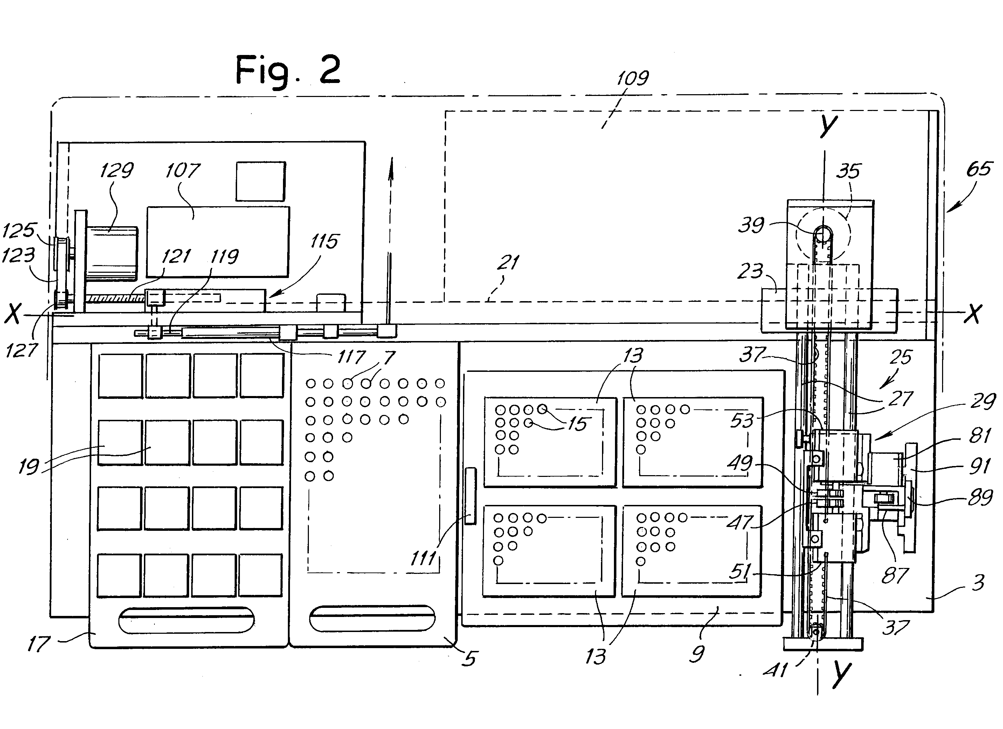

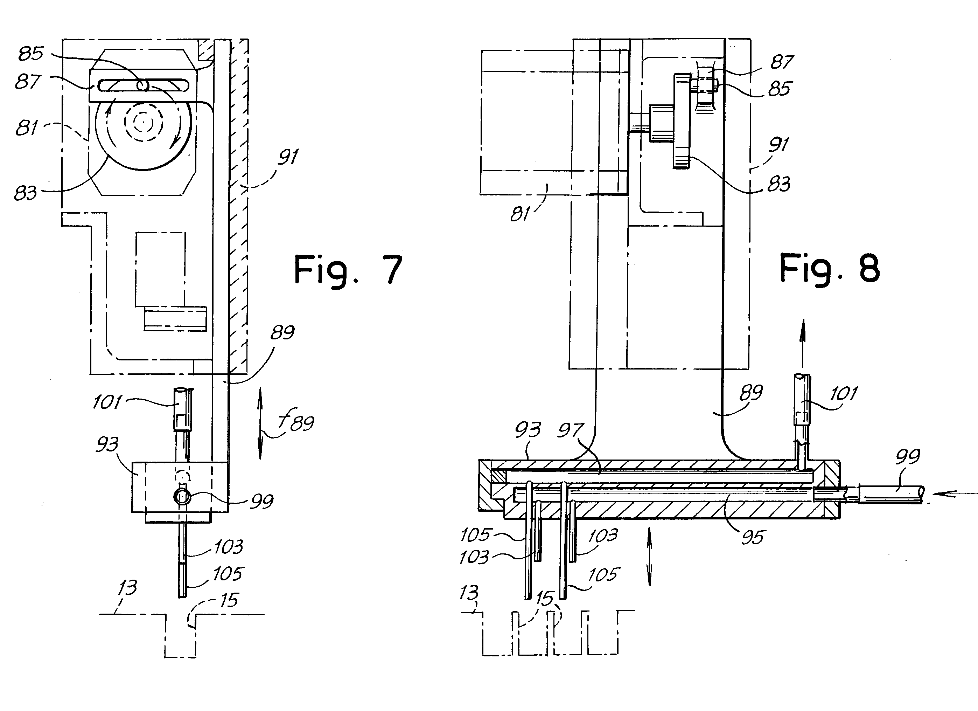

Also carried by the carriage 29 is a direct current motor 81 which turns a disk 83 to which is attached a pin 85 sliding in a slot 87 attached to a runner 89 carrying means for washing the wells 15 of the plate 13. The runner 89 slides, on the vertical axis Z-Z, in a guide 91 attached to the carriage 29. At its lower end, the slide 89 carries a washing member 93 comprising two parallel channels 95 and 97 for the introduction and aspiration, respectively, of the washing water. Into the channel 95 emerges a flexible feed tube 99 conveyed by the flexible guide channel 63 toward the apparatus housing 65, while the channel 97 is connected to a flexible aspiration tube 101, by which the water coming from the feed tube 99 and introduced into the wells 15 is aspirated. As can be seen in particular in the section shown in Fig. 8, nozzles 103 of comparatively short length extend downward from the channel 95, while nozzles 105 of greater length extend in the same direction from the channel 97. The nozzles 103 and 105 are arranged close together in pairs so that the nozzles of each pair can be inserted into the same well 15. Advantageously, on the washing member 93, a plurality of pairs of nozzles 103, 105 are provided to enable a plurality of wells 15 to be washed at the same time. Washing is performed by introducing water from the channel 95 into the shorter nozzles 103 and aspirating the water from the bottom of the wells 15 through the longer nozzles 105. The water is circulated by means of a peristaltic pump 107 housed in the apparatus housing (Fig. 2). With control of the whole appratus by appropriate electronic management means, diagrammatically indicated by 109, the peristaltic pump 107 guarantees that the washing is performed always with a predetermined amount of water, thereby avoiding both excessive washing such as might damage the stratum deposited on the walls of the wells 15, and insufficient washing such as might cause errors in the subsequent readings and risks of contamination.

The apparatus thus briefly described operates in the following manner. Once the assay tubes 7, the plates 13 and the cuvettes 19 have been placed in their respective seatings, the arm 25 and the carriage 29, under the control of a microprocessor (not shown) forming part of the electronic system indicated as a whole by 109, act to bring the needle 43 over one of the assay tubes 7; the motor 51 causes the needle 43 to descend into the assay tube 7, and an aspirating and dispensing system acts to aspirate the desired quantity of biological fluid to be analyzed. The needle is then raised, the arm 25 and the carriage 29 are moved to bring the needle 43 over the well 15 into which it is intended to dispense the aspirated biological fluid. The needle 43 is lowered, and the aspirating and dispensing system acts to dispense the fluid into the well 15. Next, the needle 43 is raised, moved toward a washing cuvette 111 formed in the seating 9 and the aspirating and dispensing system acts to discharge through the needle 43 a sufficient quantity of water fully to wash the inside of said needle. The discharged water is received in the cuvette 111 and aspirated through an appropriate tube and an aspirating means - these are not shown. The outer surface of the needle 43 is washed on each movement of the needle 43 through the holes 67 by the flow of water circulating through the flexible tubes 77, 79 and through the channel 75.

The operation described above is repeated for each assay tube 7 that it is desired to analyze, and optionally a number of times for each assay tube if it is intended to perform different assays on the same sample. In such a case, of course, each dispensing operation will be into a different well 15.

The same operations as described above are repeated with the needle 45 in taking up and dispensing the reagents, which are taken from the cuvettes 19.

For the two needles 43 and 45, two separate aspirating and dispensing systems are provided: these are substantially identical and are cursorily illustrated in Figs 1 through 3, where they are indicated as a whole by the numbers 113 and 115. The following describes one of the two systems, the other being substantially identical. The aspirating and dispensing system comprises a syringe, that is to say a cylinder-plunger system 117 is connected to a threaded bar 119 operated via a belt 123, a pair of gears 125, 127 and a motor 129. The cylindrical cavity of the syringe 117 is connected to two lines, one a feed line 131 and the other an aspirating line 133, on each of which is positioned a respective solenoid valve 135, 137. The aspirating lines 133 are connected to a water tank, while the feed lines are connected via the flexible tubes 59 and 61 to the two needles 43, 45 for dispensing the biological fluid and the reagents respectively. The aspirating and dispensing systems are controlled by the microprocessor of the apparatus.

Once the biological fluid and any reagent has been dispensed into the well 15, the plates 13 are incubated for a predetermined period of time, optionally at a controlled temperature and with vibration. To this end, as shown in Fig. 1, the seating 9 carrying the plates 13 is equipped with heating resistors 131 positioned in a suitable manner on the under part of the seating 9 beneath the plates 13. These resistors serve to keep the contents of the wells 15 at the desired temperature during the reaction. Furthermore, the legs 11 on which the seating 9 stands are connected to the base of the apparatus by means of elastic elements 133 which allow the seating 9 to vibrate. The vibration is imparted by an electric motor 135 supported on the under part of the seating 9. An off-balance counterweight 137 is positioned on the shaft of the motor 135, so that as the motor 135 rotates, vibration is imparted to the seating 9.

At the end of the period of incubation or reaction, the fluid contained in the wells 15 must be removed. To this end, the arm 25 is brought with the washing member 93 over a line of wells 15 and lowered until the nozzles 103, 105 enter their respective wells. At this point the peristaltic pump 107 pumps a predetermined quantity of water into the wells 15 in order fully to remove the fluid contained therein, without however eating into the surface stratum which has formed on the internal walls of the well. The washing member 93 is then raised and moved translationally toward another series of wells 15, continuing in this manner until all the wells 15 on the plates 13 have been washed. At this point the plates 13 are ready to be taken and introduced into an apparatus for the reading of the results of the assay, with no need for further handling.

It will be understood that the drawing shows only an illustrative embodiment which is given purely as a practical demonstration of the invention, it being possible for said invention to vary as regards shapes and arrangements without thereby departing from the scope of the concept underlying the said invention. Any reference numbers appearing in the accompanying claims are intended to facilitate the reading of the claims with reference to the description and drawing, and do not limit the scope of protection represented by the claims.

## Claims

1. An apparatus for immunoassay and suchlike comprising: a first seating (5) for holding a plurality of samples (7) of biological fluid to be analyzed; second seating (9) for holding at least one plate (13) with wells (15) into which is dispensed the biological fluid for assay; and a mobile arm (25) on which means (43) are provided for dispensing the biological fluid to be analyzed in which apparatus said arm (25) carries means (93) for washing the wells (15) prior to the subsequent reading of the samples contained in said wells (15).

2. The apparatus as claimed in claim 1, in which said means (93) for washing the wells (15) have at least one pair of tubes or nozzles (103,105) side by side, one of which (103) introduces a washing liquid into the corresponding well (15),while the other (105) takes up the liquid from inside the corresponding well (15).

3. The apparatus as claimed in claim 2 in which said two tubes or nozzles (103,105) are of differing lengths, the tube or nozzle (103) for the introduction of the washing liquid being shorter.

4. The apparatus as claimed in claim 2 or 3, in which said washing means (93) have a plurality of pairs of tubes or nozzles (103,105) in alignment with each other for the simultaneous washing of a number of wells (15).

5. The apparatus as claimed in one or more of the preceding claims, in which said washing means (93) are carried by a slide (89) which is vertically movable and carried by said arm (25) propelled along two horizontal and perpendicular axes (x-x;y-y).

6. The apparatus as claimed in one or more of the preceding claims, comprising a peristaltic pump (107) for supplying the washing liquid.

7. The apparatus as claimed in one or more of the preceding claims, in which the second seating (9) has means (131) for controlling the temperature of the plate or plates (13) arranged in said seating.

8. The apparatus as claimed in one or more of the preceding claims, in which the second seating (9) is equipped with a vibrator means (133,135,137).

9. The apparatus for immunoassay; the whole as described and shown for illustrative purposes in the accompanying drawing.

Fig. 1

# Fig. 2

EP 0 500 506 A1

# Fig. 3

Fig. 4

Fig. 5

Fig. 6

10

Fig. 8

Fig. 7

EP 0 500 506 A1

**European Patent Office**

# EUROPEAN SEARCH REPORT

Application Number

EP 92 83 0063

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 210 014 (CETUS CORPORATION)<br>* page 16, line 19 - page 20, line 6; figure 1 *<br>* page 44, line 26 - page 50, line 6 *<br>--- | 1-6 | G01N35/06 |
| X | WO-A-8 706 008 (BECKMAN INSTRUMENTS)<br>* page 17 - page 23 *<br>* page 42, line 31 - page 44, line 26; figures 1,7,10,11 *<br>--- | 1-6 | |
| A | WO-A-8 602 168 (CETUS CORPORATION)<br>* page 16, line 21 - line 26 *<br>--- | 1-7 | |
| A | US-A-4 803 050 (D.R. MACK)<br><br>----- | | |

TECHNICAL FIELDS
SEARCHED (Int. Cl.5)

G01N
B01L

The present search report has been drawn up for all claims

| Place of search | Date of completion of the search | Examiner |
|---|---|---|
| THE HAGUE | 25 MAY 1992 | HODSON C.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

12